# EUROPEAN PATENT SPECIFICATION

(11) **EP 4 289 681 B1**
(45) Date of publication and mention of the grant of the patent: **25.09.2024**
(21) Application number: 22177749.3
(22) Date of filing: 08.06.2022
(51) Int. Cl.: B60R 21/38

(54) **SAFETY DEVICE IN A VEHICLE**
SICHERHEITSVORRICHTUNG IN EINEM FAHRZEUG
DISPOSITIF DE SÉCURITÉ DANS UN VÉHICULE

(43) Date of publication of application: 13.12.2023
(73) Proprietor: Autoliv Development AB, 447 83 Vårgårda (SE)
(72) Inventor: ANDERSSON, Mikael, 447 83 Vårgårda (SE); RYDSMO, Erik, 447 83 Vårgårda (SE)
(74) Representative: AWA Sweden AB

(56) References cited:
- EP-A2- 1 733 929
- EP-A2- 1 808 606
- DE-A1- 102007 009 096
- DE-A1- 102018 108 994
- FR-A1- 2 721 073

## Description

### Technical field

The present invention refers to a safety device in a vehicle.

### Technical background

It is well known in the art to use actuators in safety devices in a motor vehicle which actuators are formed by a piston that is moved from a retracted position into an extended position by gas generated by a gas generator. One example is in the use of a hood lifter to lift the hood or bonnet of a vehicle in order of providing protection for a pedestrian hit by the vehicle. It has been observed that if a motor vehicle hit a pedestrian, the bumper of the vehicle will often strike the legs or lower torso of the pedestrian. Hence, the legs of the pedestrian will normally be pushed in the direction of travel of the vehicle and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen. In order to minimize the damages of the pedestrian caused from such an impact as described above motor vehicles are often provided with so called hood lifting arrangements. These arrangements are generally constructed such that the rear part of the hood, i.e. the part closest to the windscreen, is lifted by one or more actuators. The hood will in general provide an efficient, flexible impact energy absorbing structure in the case when a vehicle hit a pedestrian. However, if the hood is not lifted, there is a higher risk that the hood will be deformed to such extent that hard, non-flexible parts beneath the hood, e.g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. In addition, a less acute angle between the wind shield and the hood will also contribute to a less severe condition for a person being hit by a vehicle.

The hood lifters are arranged in the engine compartment and are configured to act in an upward direction. With prior art designs of the actuators, the gas generator and hence also the power connector is arranged in a bottom end of the actuator, which means that it is hard to access the power connector when connecting the actuator to the vehicles ECU (Electrical Control Unit). One way is to deliver the actuator with an integrated cable harness, i.e. type of extension cord. This allows the interface between the actuator and the cable harness to be delivered in a sealed condition to prevent intrusion of moisture or dirt over time. The cable harness is however the most expensive component in an actuator, whereby there is a desire to omit the cable harness and instead rely on the general cable system already present in the vehicle. The similar problems apply for other safety devices using actuators, such as seat belt pretensioners.

EP 1 808 606 A2 discloses a safety device in a vehicle, said safety device comprising an actuator comprising a housing having a first end and a second end, a piston arrangement comprising a piston and a piston rod, the piston arrangement being adapted to fit in the housing and to be moved from a retracted position to an extended position, a gas generator and a power connector configured to power the gas generator; wherein the piston has a first end forming a pressure surface facing the first end of the housing, a gas chamber is formed between the pressure surface of the piston and an inner envelope wall of the housing, and the gas generator is arranged inside the gas chamber.

### Summary

It is an object of the present invention to provide safety device that is easy to mount in a vehicle and to be connected to the vehicle's ECU also in narrow spaces such as in an engine compartment or under a seat.

Another object is to provide a safety device that allows a more flexible position of the power connector in view of the gas generator to thereby facilitate an adaption to available space in the vehicle.

Yet another object is to provide a safety device where the actuator can be connected to the vehicle's ECU without any integrated cable harness and without jeopardizing the sealing of the actuator.

These and other objects that will be apparent from the following summary and description are achieved by a safety device in a vehicle, said safety device comprising an actuator comprising a housing having a first end and a second end, a piston arrangement comprising a piston and a piston rod having a supporting element projecting outside the housing, the piston arrangement being adapted to fit in the housing and to be moved from a retracted position to an extended position, a gas generator and a power connector configured to power the gas generator; wherein the piston has a first end forming a pressure surface facing the first end of the housing, a gas chamber is formed between the pressure surface of the piston and an inner wall of the housing, and the gas generator being arranged inside the gas chamber; and wherein the power connector is connected to the supporting element, and at least a portion of the power connector and the second end of the piston rod is over-moulded to form an encapsulating sealing.

Accordingly, a safety device is provided wherein the piston arrangement has a supporting element that projects outside the housing and where the power connector is connected to the supporting element. The power connector is configured to power the gas generator which in turn is arranged inside the gas chamber, i.e. inside the housing. This means that a safety device is arranged where the power connector moves along with the piston arrangement as the piston arrangement is set from the retracted position to the extended position. In the event the safety device should be a hood lifter which typically operates in an upward direction, this means that the power connector will be more easy accessible in an engine compartment. Also, the extension and design of the supporting element, and hence the position of the power connector, may be adapted to the available space in the engine compartment, which further facilitates connection of the power connector to the vehicle's ECU no matter if this is made via an integrated cable harness or via the vehicle's cable system.

The supporting element may serve a dual purpose of supporting the power connector and forming an impact surface that is configured to come in contact with the hood in the event the piston arrangement is set to its extended position. In order of not destroying the power connector, it is preferred that the power connector is arranged in an offset position on the supporting element in view of the impact surface. The power connector must accordingly not be arranged aligned with the axial extension of the piston arrangement.

The over-mould may be seen as a plastic cover that provides a protective and sealing encapsulation of interfaces between the parts. This prevents intrusion of moisture and dirt into the interior of the housing.

The gas generator may be arranged in the gas chamber supported by the first end of the piston, and the gas generator may be operatively connected to the power connector via a connecting wire arrangement.

The connecting wire arrangement may be arranged to extend along a channel extending along the interior of the piston arrangement or be arranged to extend along a recess in an outer envelope surface of the piston arrangement.

The connecting wire arrangement may comprise two connecting rods. The connecting wire arrangement may be formed by rigid rods made of a metal with a high conductivity. In an alternative embodiment, the connecting wire arrangement may be formed by flexible or semi-flexible wires. No matter configuration, the connecting wire arrangement interconnect the power connector with terminals of the gas generator.

Each of the two connecting rods may comprise a spring biased connector configured to electrically connect to a respective terminal of the gas generator. A spring biased connector provides an easy mechanical connection during assembly of the actuator. Further, by a spring biased connector, a clamping force may be provided for that acts against the relevant terminal in two opposing radial direction. Thereby a robust mechanical connection is provided for that is strong enough to withstand vibrations and the like during the life length of the vehicle.

The piston rod may comprise at least one axially extending channel or groove configured to receive at least a portion of the connecting rods of the connecting wire arrangement.

The channel or groove contributes to keeping the connecting wire arrangement in position along the piston rod, both during assembly and during moving of the piston arrangement from the retracted position to the extended position.

In the event of the piston arrangement should be made of a plastic material, the plastic will serve as an insulator, whereby there is no need to provide the connecting wire arrangement as such with any insulting cover. Further, in the event of at least one groove, a reduced contact surface may be provided for between the inner wall of the housing and the outer wall or the piston arrangement, which in turn reduces the friction during moving of the actuator from the retracted position to the extended position.

The gas generator may be arranged in the gas chamber supported by the first end of the piston in a position closer to an axial center point of the housing than to the first end of the housing.

The gas generator may in one embodiment be arranged in the bottom of an axially extending recess of the piston. The gas generator may in another embodiment be arranged in the free end of the piston that is facing the closed end wall of the housing. No matter position, the force of the gas that will be generated by the gas generator in the event of a deployment of the gas generator will be directed towards the closed end wall of the housing, and as the gas chamber is filled with gas it will force the piston arrangement in the opposite direction and thereby move the piston arrangement from its retracted position to its extended position. Thus, the direction of the generated gas is opposite to the working direction of the piston arrangement.

The piston arrangement may at least partially be formed by a plastic material, whereby the piston will melt and lose stability in the event of a bonfire situation leading to self-ignition of the gas generator. Thereby, the risk of the piston arrangement forming a projectile that may shoot away in an uncontrolled manner will be reduced.

The piston arrangement may be formed by injection moulding or by 3D printing. By injection moulding or 3D printing, the piston arrangement may be given a complex geometry allowing formation of e.g. one or more recesses that can be used in different ways depending on an expected effect. By way of example, the one or more recesses may be used to fixate the gas generator in the gas chamber in different positions in view of the housing. Thereby it is made possible to adapt the force which is applied by the gas generator to a pressure surface of the piston when deploying the gas generator. One or more recesses may be arranged to provide the gas chamber a given volume as seen in a condition when the piston is in its retracted position. One or more recesses may also be used to fixate one or more spacers to the piston arrangement to thereby provide the gas chamber a given volume as seen in a condition when the piston arrangement is in its retracted position. Furter, one or more recesses may be used to provide the piston with a tailormade contact surface with the inner wall of the housing. Thus, one or more grooves may be formed in the outer envelope surface of the piston arrangement. This makes it possible to better control the friction between the piston and the housing when the piston is moved from the retracted position to the extended position. Additionally, the piston arrangement may be provided with a complex geometry allowing support and/or containment of the connecting wire arrangement and/or the gas generator.

The piston may in one embodiment comprise an axially extending recess forming part of the gas chamber. The recess may in one embodiment have a uniform cross section along its axial extension. The recess may in another embodiment have an axially tapering extension. Since the volume of the recess will form part of the gas chamber of the actuator, the volume of the recess may be adapted to achieve a certain characteristic of the actuator in terms of force and speed.

The actuator may further comprise a spacer arranged in the gas chamber. A spacer allows the provision of a modular actuator where one and the same housing and/or piston arrangement may be used in combination with one or more exchangeable spacers, whereby the volume of the gas chamber may be adapted to achieve a certain characteristic of the actuator in terms of force and speed.

The power connector may be a sealed connector in which an interface between the power connector and terminals of the connecting wire arrangement is filled or sealed-off with a cured sealing material. The sealing material may by way of example be a UV curable adhesive that is injected into the power connector or relevant interfaces during assembly of the actuator. Especially in the event the safety device should be a hood lifter, it is essential that moisture and dirt is not allowed to jeopardize the function of the safety device over time. One way is to seal-off the interface between terminals of the power connector and corresponding terminals of the connecting wire arrangement by filling the same with a curable sealing material.

The housing may be formed by deep drawing a metallic material. Deep drawing allows an easy manufacturing of the housing without any need for welding to form lugs and the like which are normally used to fixate the actuator to the vehicle. Further, since the housing may be formed without welding, there is no risk of introducing welding-related cracks or tensions in the material.

The safety device may in one embodiment be a hood lifter in a vehicle.

The safety device may in one embodiment be a seat belt pretensioner.

The safety device may in one embodiment be a seat structure reinforcer that can be activated during a crash scenario to reinforce the seat structure and connection to the car structure to counteract against high forces to the seat.

### Brief description of the drawings

The invention will be described in detail with reference to the schematic drawings.
Fig. 1 discloses a schematic exploded view of a first embodiment of a safety device according to the invention.
Fig. 2 discloses a schematic cross section of the safety device according to the first embodiment in its assembled condition.
Fig. 3 discloses a schematic overview of the interface between the wire connecting assembly and the power connector and the gas generator respectively.
Fig. 4 discloses a schematic cross section of the safety device according to the first embodiment upon deployment of the gas generator.
Fig. 5 discloses a schematic cross section of the safety device according to the first embodiment after deployment of the gas generator when the piston arrangement is set to its extended position.
Fig. 6 discloses a schematic highly simplified cross section of a safety device according to the invention using a spacer.
Fig. 7 discloses a schematic exploded view of a second embodiment of a safety device according to the invention.
Fig. 8 discloses a schematic cross section of a third embodiment of a safety device according to the invention.

### Detailed description

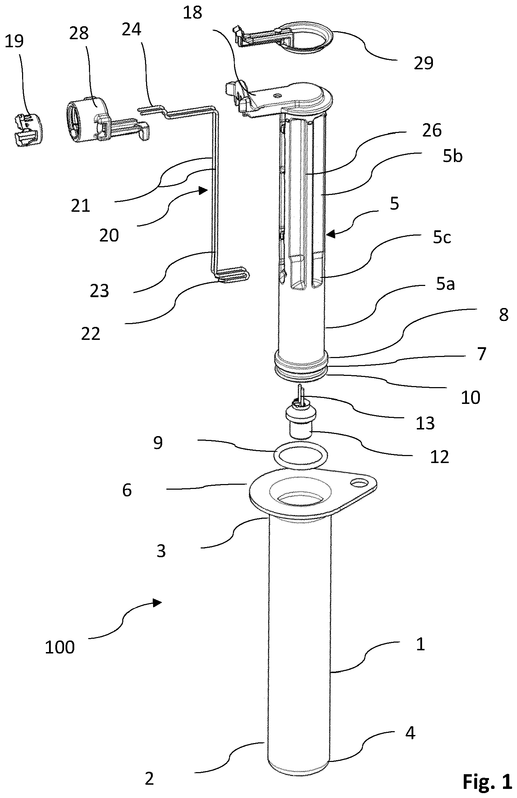

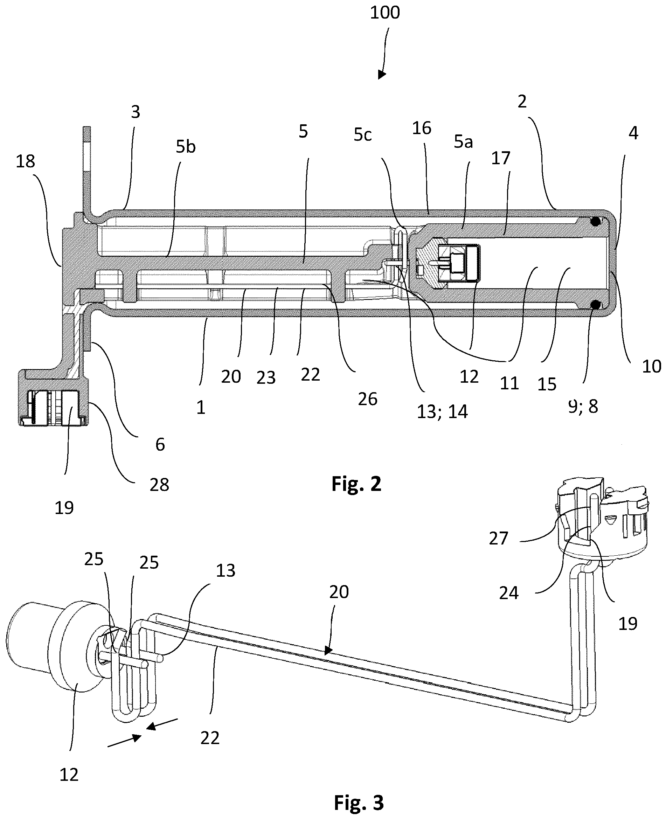

Now turning to Figs. 1 and 2 the overall design of a first embodiment of a safety device according to the invention is disclosed. Fig. 1 is a schematic exploded view of the safety device and Fig. 2 is a schematic cross section of the same safety device in an assembled condition.

The safety device comprises an actuator 100 that comprises a tubular housing 1 having a first end 2 and a second end 3. The first end 2 comprises a closed end wall 4. The second end 3 of the housing 1 is an open end through which the components of the actuator 100 are inserted during assembly and through which the piston arrangement 5 is configured to project during operation of the actuator 100 when moved from an ordinary retracted position to an extended position.

The housing 1 may be formed by deep drawing a metal material. By deep drawing, the end wall 4 of the first end 2 of the housing 1 will be automatically formed and also, a radially extending flange portion 6 may be formed at the second end 3 of the housing 1. The flange portion 6 may be used to mount the actuator 100 to a vehicle.

A free end 7 of the piston arrangement 5, configured to face the first end 2 of the housing 1 comprises a circumferential recess 8 configured to receive a sealing 9. The sealing 9 is disclosed as an O-ring.

The piston arrangement 5 which is formed as a unitary body comprises a first portion forming a piston 5a and a second portion forming a piston rod 5b. The piston 5a and the piston rod 5b are merging with each other via a waist portion 5c forming a radially extending cavity. The piston 5a is configured to face the first end 2 of the housing 1 whereas the piston rod 5b is configured to face the second end 3 of the housing 1. The piston 5a has a first end forming a pressure surface 10 facing the first end 2 of the housing 1.

The piston 5a comprises an axially extending recess 11, see Fig. 2. A gas generator 12 is supported by a bottom wall of said recess 11 with terminals 13 of the gas generator 12 extending through openings 14 in the bottom wall of the recess 11 and into the waist portion 5c. The recess 11 is disclosed as having a uniform cross section along its axial extension. The recess 11 may with remained function have an axially tapering extension. Since the volume of the recess 11 will form part of a gas chamber 15 of the actuator 100, the volume of the recess 11 may be adapted to achieve a certain characteristic of the actuator 100 in terms of applied force and speed.

The gas chamber 15 is formed between an inner envelope surface 16 of the housing 1, the pressure surface 10 of the piston 5a and an inner envelope surface 17 of the recess 11. It is to be understood that the volume of the gas chamber 15 changes as the piston arrangement 5 is moved from its retracted position where the volume is the smallest to its extended position where the volume is the largest.

The gas generator 12 is arranged inside the gas chamber 15. The gas generator 12 may as is disclosed in Fig. 2, be arranged in the gas chamber 15 supported by the first end of the piston 5a in a position closer to an axial center point of the housing than to the first end 2 of the housing 1.

The piston rod 5b has a supporting element 18 configured to extend outside the housing 1 in a condition when the piston arrangement 5 is in the retracted position in the housing 1.

The supporting element 18 of the piston arrangement 5 is disclosed as extending transverse to an axial extension of the actuator 100. It is however to be understood that the supporting element 18 may have an extension that is adapted to the available space in e.g. an engine compartment in a vehicle or in and around a seat. It may thus form an angle different to 90 degrees to the axial extension of the piston.

The supporting element 18 supports a power connector 19. The power connector 19 is preferably a standard component configured to fit a standard electrical connector of the vehicle. The power connector 19 is configured to allow the safety device to be connected to a vehicle's ECU (not illustrated) via a non-disclosed connector or via a non-disclosed cable system. The connector or cable system may be a system forming part of the vehicles power system. The power connector 19 is configured to be connected to the terminals 13 of the gas generator 12 via a connecting wire arrangement 20. The gas generator 12 is accordingly arranged in the gas chamber 15 supported by the piston 5, and the gas generator 12 is operatively connected to the power connector 19 via the connecting wire arrangement 20.

The connecting wire arrangement 20 comprises in the disclosed embodiment two rods 21 which are best seen in Fig. 1. Each rod 21 has a first connecting portion 22 configured to connect to a terminal 13 of the gas generator 12, an intermediary portion 23 configured to follow the extension of the piston rod 5b and the supporting element 18, and a second connecting portion 24 configured to connect to the power connector 19 in a position outside the housing 1.

The first connecting portion 22, see Fig.3, is in the disclosed embodiment formed as a U-shaped portion having two opposing plates 25 acting as a spring based connector. More precisely, the first connecting portion 22 is configured to mechanically connect to a terminal 13 of the gas connector 12 by the terminal 13 being arranged between the two plates 25. As a result of the U-shape, the two plates 25 will be forced apart by the terminal 13 and thereby clamp against the terminal 13 in two opposing radial directions, see arrows. By the thus formed spring biased connector an easy mechanical connection is allowed during assembly of the actuator 100. Thereby a robust mechanical connection is provided for that is strong enough to withstand vibrations and the like during the life length of the vehicle.

The intermediary portion 23 of the connecting wire arrangement 20 extends along a groove 26, see Fig. 2, that is formed in the outer envelope surface of the piston rod 5b. The skilled person realizes that the connecting wire arrangement 20 with remained function may be arranged to extend in a channel that extends along the interior of the piston arrangement.

The second connecting portion 24, see Fig. 3, extends into a respective opening in the power connector 19 thereby forming a terminal 27 in the power connector 19.

By the two parallel connecting wire rods 21 of the connecting wire arrangement 20, the power connector 19 is provided with two terminals 27 that can be connected to a vehicle's ECU (not illustrated).

The connecting wire rods 21 may be formed as rigid rods made of a metal with a high conductivity. In an alternative embodiment, the connecting wire arrangement 20 may be formed by flexible or semi-flexible wires. No matter configuration, the first and second connecting portions 22, 24 of the connecting wire arrangement 20 interconnect the power connector 19 with the terminals 13 of the gas generator 12. The channel or groove 26 of the piston rod 5b contributes to keeping the connecting wire arrangement 20 in position along the piston rod, both during assembly and during moving of the piston arrangement 5 from its retracted position to its extended position. In the event the piston arrangement 5 should be made of a plastic material, the plastic will serve as an insulator, whereby there is no need to provide the connecting wire arrangement 20 as such with any insulting cover.

The piston arrangement 5 may at least partially be formed by a plastic material, whereby the piston arrangement will melt and lose stability in the event of a bonfire situation leading to self-ignition of the gas generator 12. Thereby, the risk of the piston arrangement 5 forming a projectile that may shoot away in an uncontrolled manner is reduced.

The piston arrangement 5 may be formed by injection moulding or by 3D printing. By injection moulding or 3D printing, the piston arrangement 5 may be given a complex geometry allowing formation of e.g. one or more recesses 11 that can be used in different ways depending on an expected effect. By way of example, the one or more recesses 11 may be used to fixate the gas generator in the gas chamber 15 in different positions in view of the housing 1. Thereby it is made possible to adapt the force which is applied by the gas generator 12 to a pressure surface 10 of the piston when deploying the gas generator. One or more recesses 11 may be arranged to provide the gas chamber 15 a given volume as seen in a condition when the piston is in its retracted position.

Now turning to Figs. 1 and 2 anew. The power connector 19 and at least the supporting element 18 are disclosed as being over-moulded to form an encapsulating sealing 28. The over-moulding may be seen as a plastic cover that provides a protective and sealing encapsulation of interfaces between the parts. This prevents intrusion of moisture and dirt into the interior of the housing 1.

To further prevent intrusion of moisture and dirt into the housing 1, the second end of the housing 3, which as such is open to allow the piston arrangement 5 to be moved to its extended position, is provided with a sealing ring 29.

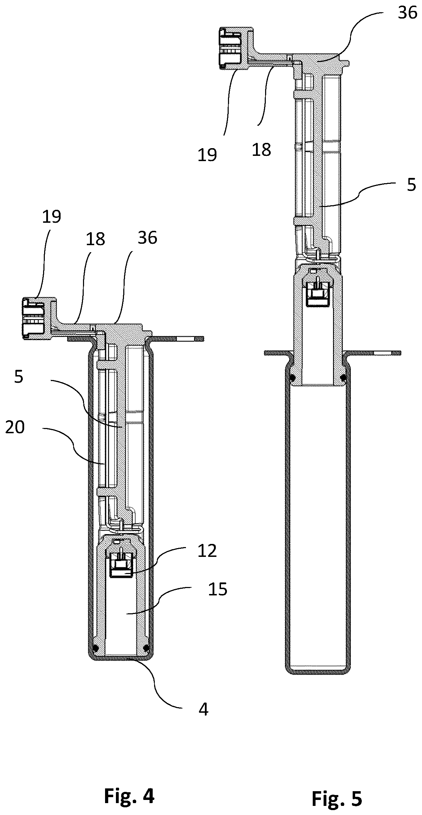

Now turning to Figs. 4 and 5, the operation of a safety device according to the first embodiment of the invention is disclosed. Fig. 4 discloses the safety device with the piston arrangement 5 in its retracted position, i.e. its ordinary use. The only part projecting out from the housing is the supporting element 18 to which the power connector 19 is connected.

The power connector 19 is configured to be connected to an Electronic Control Unit, ECU (not illustrated) of a vehicle in a manner well known in the art. In the event the ECU via a crash sensor and processor integrated in the ECU should determine that there is an emergency situation to be responded to, such as a frontal crash, an activation signal is communicated to an ignitor of the gas generator 12 which deploys the same. The activation signal is according to the invention transferred from the power connector 19 to the gas generator 12 via the connecting wire arrangement 20 that extends along the piston arrangement 5.

The deployment of the gas generator 12 results in a sudden gas generation that acts on the piston arrangement 5 and moves the same from the retracted position, see Fig. 4, to the extended position, see Fig. 5, to thereby e.g. lift a hood or pull the seat belt depending on if the safety device is used as a hood lifter or a seat belt pretensioner.

The force of the gas that is generated upon deployment of the gas generator 12 will be directed towards the closed end wall 4 of the housing 1, and as the gas chamber 15 is filled with gas it will force the piston arrangement 5 in the opposite direction and thereby move the piston arrangement 5 from its retracted position to its extended position. Thus, the direction of the generated gas is opposite to the working direction of the piston arrangement 5.

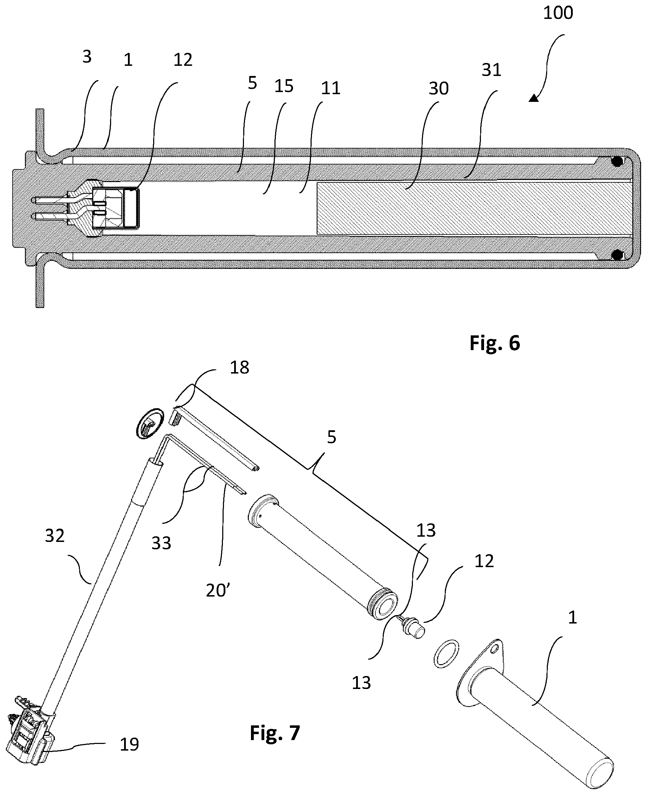

Now turning to Fig. 6 is a highly schematic cross section of an actuator 100 according to the invention is disclosed. To facilitate understanding, the piston arrangement 5 is disclosed highly schematically. Also the supporting element, the power connector and the connecting wire arrangement have been omitted. The purpose of Fig. 6 is to disclose that the actuator 100 may comprise an optional spacer 30. The spacer is disclosed as being arranged in the gas chamber 15. This allows the provision of a modular actuator where one and the same housing 1 and/or piston arrangement 5 may be used in combination with one or more exchangeable spacers 30, whereby the volume of the gas chamber 15 may be adapted to achieve a certain characteristic of the actuator in terms of force and speed.

In a condition when the gas generator 12 is deployed, generated gas will act against the end of the spacer 30 facing the second end 3 of the housing 1. This will force the piston arrangement 5 to move from its retracted position to its extended position by the piston arrangement 5 axially moving inside the housing 1 and along an outer envelope wall 31 of the spacer 30. Accordingly, there is a relative movement between the spacer 30 and the piston arrangement 5.

Now turning to Fig. 7, an exploded view of a second embodiment of the safety device according to the invention is disclosed. One difference between the second embodiment and the first embodiment is the design of the connecting wire arrangement 20' and the position of the power connector 19. The power connector 19 is connected to the supporting element 18 of the piston arrangement 5 and hence to the piston arrangement 5 via a cable harness 32. The cable harness 32 encloses two wires 33 that constitute the connecting wire arrangement 20'. The wires 33 extend from the power connector 19 that is arranged outside the housing 1 to the gas generator 12 that is arranged in the housing 1. The first ends of the wires 33 connects to the terminals 13 of the gas generator 12. The connection may by way of example be a mechanical or soldered connection. The second ends of the wires 33 connect to the power connector 19. The wires may be flexible, semi flexible or even rigid.

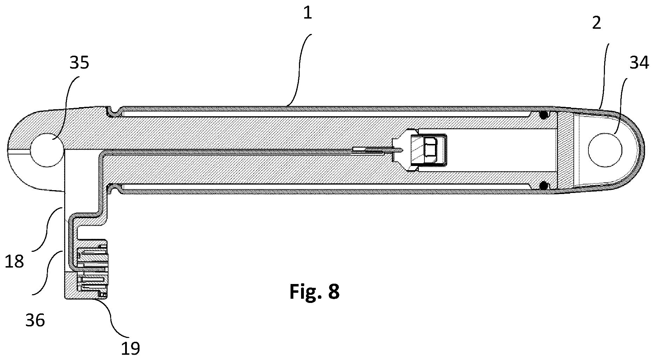

Now turning to Fig. 8, a schematic cross section of a safety device according to a third embodiment is disclosed. The embodiment differs from that of the first embodiment in that the housing 1 in its first end 2 comprises a first eyelet 34. The first eyelet 34 is configured to form a first connection point when arranging the safety device in a vehicle. Further, the embodiment differs from that of the first embodiment in that the support element 18 comprises a second eyelet 35. The second eyelet 35 is configured to form a second connection point when arranging the safety device in a vehicle. The first and second eyelets 34, 35 may be used to allow a pivotable suspension of the safety device.

Accordingly and in summary, a safety device is provided wherein the piston arrangement 5 has a supporting element 18 that projects outside the housing 1 and where the power connector 19 is connected to the supporting element 18. The power connector 19 is configured to power the gas generator 12 which in turn is arranged inside the gas chamber 15, i.e. inside the housing 1. This means, that the power connector 19 moves along with the piston arrangement 5 as it is set from the retracted position to the extended position. In the event the safety device should be a hood lifter which typically operates in an upward direction, this means that the power connector 19 will be more easy accessible in an engine compartment. Also, the extension and design of the supporting element 18, and hence the position of the power connector 19, may be adapted to the available space in the engine compartment, which further facilitates connection of the power connector 19 to the vehicle's ECU no matter if this is made via an integrated cable harness or via the vehicle's cable system.

The supporting element 18 may serve a dual purpose of supporting the power connector 19 and forming an impact surface 36 that is configured to either come in contact with or remain in contact with the hood in the event the piston arrangement is set to its extended position. In order of not destroying the power connector 19, it is preferred that the power connector 19 is arranged in an offset position on the supporting element 18 in view of the impact surface 36. The power connector 19 must accordingly not be arranged aligned with the axial extension of the piston arrangement 5 but may form any suitable angle thereto. Further, the power connector 19 must not be arranged to project from the supporting element 18 on the same side as the intended impact surface 36. The embodiment of Fig. 8 discloses one example where the power connector 19 is arranged on a surface of the supporting element 18 opposite the impact surface 36.

The power connector 19 has been disclosed as a female type connector. It may with remained function be a male type connector. Depending on the connector system used in the vehicle to which the actuator 100 should be connected, the power connector 19 can be an adaptor configured to receive another power connector (not disclosed) which in turn comprises terminals to connect with the terminals of the connecting wire arrangements 20 that extends from the gas generator 12 inside the housing 1.

The power connector may be a sealed connector in which an interface between the power connector and corresponding terminals of the connecting wire arrangement is filled or sealed-off with a cured sealing material. The sealing material may by way of example be a UV curable adhesive that is injected into the power connector or relevant interfaces during assembly of the actuator. Especially in the event the safety device should be a hood lifter, it is essential that moisture and dirt is not allowed to jeopardize the function of the safety device over time. One way is to seal-off the interface between terminals of the power connector and corresponding terminals of the connecting wire arrangement by filling the same with a curable sealing material.

## Claims

1. A safety device in a vehicle, said safety device comprising an actuator (100) comprising a housing (1) having a first end (2) and a second end (3), a piston arrangement (5) comprising a piston (5a) and a piston rod (5b) having a supporting element (18) projecting outside the housing (1), the piston arrangement (5) being adapted to fit in the housing (1) and to be moved from a retracted position to an extended position, a gas generator (12) and a power connector (19) configured to power the gas generator (12); wherein
the piston (5) has a first end forming a pressure surface (10) facing the first end (2) of the housing (1),
a gas chamber (15) is formed between the pressure surface (10) of the piston (5) and an inner envelope wall (16) of the housing (1), and the gas generator (12) is arranged inside the gas chamber (15); and wherein
the power connector (19) is connected to the supporting element (18) and at least a portion of the power connector (19) and the second end of the piston rod (5b) is over-moulded to form an encapsulating sealing.

2. The safety device according to claim 1, wherein the gas generator (12) is arranged in the gas chamber (15) supported by the piston (5), and wherein the gas generator (12) is operatively connected to the power connector (19) via a connecting wire arrangement (20).

3. The safety device according to claim 2, wherein the connecting wire arrangement (20) comprises two connecting rods (21).

4. The safety device according to claim 3, wherein each of the two connecting rods (21) comprises a spring biased connector configured to electrically connect to a respective terminal of the gas generator

5. The safety device according to claim 3, wherein the piston rod (5b) comprises at least one axially extending channel or groove configured to receive at least a portion of the connecting rods (21) of the connecting wire arrangement (20).

6. The safety device according to claim 1, wherein the gas generator (12) is arranged in the gas chamber (15) supported by the piston (5) in a position closer to an axial center point of the housing (1) than to the first end (2) of the housing (1).

7. The safety device according to any of the preceding claims, wherein the piston arrangement (5) is at least partially formed by a plastic material, whereby the piston will melt and lose stability in the event of a bonfire situation leading to self-ignition of the gas generator (12).

8. The safety device according to any of the preceding claims, wherein the piston (5) comprises an axially extending recess forming part of the gas chamber (15).

9. The safety device according to any of the preceding claims, wherein the actuator (100) further comprises a spacer (30) arranged in the gas chamber (15).

10. The safety device according to any of the preceding claims, wherein the power connector (19) is a sealed connector in which an interface between the power connector (19) and terminals of the connecting wire arrangement (20) is filled with a cured sealing material.

11. The safety device according to any of the preceding claims, wherein the housing (1) is formed by deep drawing a metallic material.

12. The safety device according to any of claims 1-11, wherein the safety device is a hood lifter in a vehicle.

13. The safety device according to any of claims 1-11, wherein the safety device is a seat belt pretensioner in a vehicle.

14. The safety device according to any of the claims 1-11, wherein the safety device is a seat structure reinforcer.

## Patentansprüche

1. Sicherheitsvorrichtung in einem Fahrzeug, die Sicherheitsvorrichtung umfassend einen Aktuator (100), umfassend ein Gehäuse (1), das ein erstes Ende (2) und ein zweites Ende (3) aufweist, eine Kolbenanordnung (5), umfassend einen Kolben (5a) und eine Kolbenstange (5b), die ein Stützelement (18) aufweist, das nach außen vorsteht, wobei die Kolbenanordnung (5) angepasst ist, um in das Gehäuse (1) zu passen und um von einer eingefahrenen Position in eine ausgefahrene Position bewegt zu werden, einen Gasgenerator (12) und einen Stromstecker (19), der konfiguriert ist, um den Gasgenerator (12) mit Strom zu versorgen; wobei
der Kolben (5) ein erstes Ende aufweist, das eine Druckoberfläche (10) ausbildet, die dem ersten Ende (2) des Gehäuses (1) zugewandt ist,
eine Gaskammer (15) zwischen der Druckoberflächen (10) des Kolbens (5) und einer inneren Mantelwand (16) des Gehäuses (1) ausgebildet ist, und der Gasgenerator (12) im Inneren der Gaskammer (15) angeordnet ist; und wobei
der Stromstecker (19) mit dem Stützelement (18) verbunden ist und mindestens ein Abschnitt des Leistungsanschlusses (19) und des zweiten Endes der Kolbenstange (5b) umspritzt ist, um eine umschließende Abdichtung auszubilden.

2. Sicherheitsvorrichtung nach Anspruch 1, wobei der Gasgenerator (12) in der Gaskammer (15), durch den Kolben (5) gestützt, angeordnet ist, und wobei der Gasgenerator (12) mit dem Stromstecker (19) über eine Verbindungsdrahtanordnung (20) wirkverbunden ist.

3. Sicherheitsvorrichtung nach Anspruch 2, wobei die Verbindungsdrahtanordnung (20) zwei Verbindungsstangen (21) umfasst.

4. Sicherheitsvorrichtung nach Anspruch 3, wobei jede der zwei Verbindungsstangen (21) einen federvorgespannten Verbinder aufweist, der konfiguriert ist, um mit einem jeweiligen Anschluss des Gasgenerators elektrisch verbunden zu werden.

5. Sicherheitsvorrichtung nach Anspruch 3, wobei die Kolbenstange (5b) mindestens einen sich axial erstreckenden Kanal oder eine Nut umfasst, die konfiguriert ist, um mindestens einen Abschnitt der Verbindungsstangen (21) der Verbindungsdrahtanordnung (20) aufzunehmen.

6. Sicherheitsvorrichtung nach Anspruch 1, wobei der Gasgenerator (12) in der Gaskammer (15), durch den Kolben (5) gestützt, in einer Position angeordnet ist, die näher an einem axialen Mittelpunkt des Gehäuses (1) als an dem ersten Ende (2) des Gehäuses (1) liegt.

7. Sicherheitsvorrichtung nach einem der vorstehenden Ansprüche, wobei die Kolbenanordnung (5) mindestens teilweise durch ein Kunststoffmaterial ausgebildet ist, wobei der Kolben im Falle eines Feuers schmilzt und Stabilität verliert, was zu einer Selbstentzündung des Gasgenerators (12) führt.

8. Sicherheitsvorrichtung nach einem der vorstehenden Ansprüche, wobei der Kolben (5) eine sich axial erstreckende Aussparung aufweist, die einen Teil der Gaskammer (15) ausbildet.

9. Sicherheitsvorrichtung nach einem der vorstehenden Ansprüche, wobei der Aktuator (100) ferner einen Abstandshalter (30), der in der Gaskammer (15) angeordnet ist, umfasst.

10. Sicherheitsvorrichtung nach einem der vorstehenden Ansprüche, wobei der Stromstecker (19) ein abgedichteter Verbinder ist, bei dem eine Schnittstelle zwischen dem Stromstecker (19) und Anschlüssen der Verbindungsdrahtanordnung (20) mit einem ausgehärteten Dichtungsmaterial gefüllt ist.

11. Sicherheitsvorrichtung nach einem der vorstehenden Ansprüche, wobei das Gehäuse (1) durch Tiefziehen eines metallischen Materials ausgebildet ist.

12. Sicherheitsvorrichtung nach einem der Ansprüche 1 bis 11, wobei die Sicherheitsvorrichtung ein Motorhaubenheber in einem Fahrzeug ist.

13. Sicherheitsvorrichtung nach einem der Ansprüche 1 bis 11, wobei die Sicherheitsvorrichtung ein Sicherheitsgurtstraffer in einem Fahrzeug ist.

14. Sicherheitsvorrichtung nach einem der Ansprüche 1 bis 11, wobei die Sicherheitsvorrichtung ein Sitzstrukturverstärker ist.

## Revendications

1. Dispositif de sécurité dans un véhicule, ledit dispositif de sécurité comprenant un actionneur (100) comprenant un logement (1) ayant une première extrémité (2) et une seconde extrémité (3), un agencement de piston (5) comprenant un piston (5a) et une tige de piston (5b) comportant un élément de support (18) faisant saillie en dehors du logement (1), l'agencement de piston (5) étant adapté pour s'insérer dans le logement (1) et pour être déplacé d'une position rétractée à une position étendue, un générateur de gaz (12) et un connecteur d'alimentation (19) configuré pour alimenter le générateur de gaz (12) ; dans lequel
le piston (5) comporte une première extrémité formant une surface de pression (10) faisant face à la première extrémité (2) du logement (1),
une chambre à gaz (15) est formée entre la surface de pression (10) du piston (5) et une paroi d'enveloppe interne (16) du logement (1), et le générateur de gaz (12) est agencé à l'intérieur de la chambre à gaz (15) ; et dans lequel
le connecteur d'alimentation (19) est connecté à l'élément de support (18) et au moins une partie du connecteur d'alimentation (19) et la seconde extrémité de la tige de piston (5b) est surmoulée pour former un scellage d'encapsulation.

2. Dispositif de sécurité selon la revendication 1, dans lequel le générateur de gaz (12) est agencé dans la chambre à gaz (15) supportée par le piston (5), et dans lequel le générateur de gaz (12) est connecté de manière opérationnelle au connecteur d'alimentation (19) par l'intermédiaire d'un fil de connexion (20).

3. Dispositif de sécurité selon la revendication 2, dans lequel l'agencement de fil de connexion (20) comprend deux tiges de connexion (21).

4. Dispositif de sécurité selon la revendication 3, dans lequel chacune des deux tiges de connexion (21) comprend un connecteur sollicité par ressort configuré pour se connecter électriquement à une borne respective du générateur de gaz

5. Dispositif de sécurité selon la revendication 3, dans lequel la tige de piston (5b) comprend au moins un canal ou une rainure s'étendant axialement et configuré pour recevoir au moins une partie des tiges de connexion (21) de l'agencement de fil de connexion (20).

6. Dispositif de sécurité selon la revendication 1, dans lequel le générateur de gaz (12) est agencé dans la chambre à gaz (15) supportée par le piston (5) dans une position plus proche d'un point central axial du logement (1) que de la première extrémité (2) du logement (1).

7. Dispositif de sécurité selon l'une quelconque des
revendications précédentes, dans lequel l'agencement de piston (5) est au moins partiellement formé d'une matière plastique, moyennant quoi le piston fondra et perdra sa stabilité en cas de feu, ce qui entraînera l'auto-inflammation du générateur de gaz (12).

8. Dispositif de sécurité selon l'une quelconque des revendications précédentes, dans lequel le piston (5) comprend une cavité s'étendant axialement et faisant partie de la chambre à gaz (15).

9. Dispositif de sécurité selon l'une quelconque des
revendications précédentes, dans lequel l'actionneur (100) comprend en outre une entretoise (30) agencée dans la chambre à gaz (15).

10. Dispositif de sécurité selon l'une quelconque des
revendications précédentes, dans lequel le connecteur d'alimentation (19) est un connecteur étanche dans lequel une interface entre le connecteur d'alimentation (19) et les bornes de l'agencement de fil de connexion (20) remplie d'un matériau d'étanchéité durci.

11. Dispositif de sécurité selon l'une quelconque des
revendications précédentes, dans lequel le logement (1) est formé par emboutissage profond d'un matériau métallique.

12. Dispositif de sécurité selon l'une quelconque des revendications 1 à 11, dans lequel le dispositif de sécurité est un dispositif de levage de capot d'un véhicule.

13. Dispositif de sécurité selon l'une quelconque des revendications 1 à 11, dans lequel le dispositif de sécurité est un prétendeur de ceinture de sécurité dans un véhicule.

14. Dispositif de sécurité selon l'une quelconque des revendications 1 à 11, dans lequel le dispositif de sécurité est un renfort de structure de siège.
